# EUROPÄISCHE PATENTANMELDUNG

(11) **EP 2 189 500 A1**
(43) Veröffentlichungstag der Anmeldung: **26.05.2010**
(21) Anmeldenummer: 08169630.4
(22) Anmeldetag: 21.11.2008
(51) Int. Cl.: C08L 33/10, C09D 133/10, C09J 133/10

(54) **Epoxid/(Meth)acrylat Zusammensetzung**

(71) Anmelder: Sika Technology AG, 6340 Baar (CH)
(72) Erfinder: Haufe, Markus, 8048, Zürich (CH); Kramer, Andreas, 8006, Zürich (CH)
(74) Vertreter: Sika Patent Attorneys

(57) **Zusammenfassung**

Die vorliegende Erfindung betrifft eine Zusammensetzung umfassend mindestens ein radikalisch polymerisierbares Monomer **M**; mindestens einen Radikalbildner; mindestens ein Epoxidharz **A**, welches durchschnittlich mehr als eine Epoxidgruppe pro Molekül aufweist; sowie mindestens eine Verbindung der Formel (I).

Derartige Zusammensetzungen eignen sich als Klebstoffe, Dichtstoffe oder als Beschichtungen. Sie weisen kurz nach ihrer Applikation eine hohe Anfangsfestigkeit auf und erlangen nach weiterem Aushärten bei Raumtemperatur eine hohe Endfestigkeit.

## Beschreibung

### Technisches Gebiet

Die Erfindung betrifft das Gebiet der polymerisierbaren Zusammensetzungen auf Basis von Epoxidharzen und radikalisch polymerisierbaren Monomeren.

### Stand der Technik

Sowohl der Einsatz von (Meth)acrylatzusammensetzungen als auch der von Epoxidharzen ist in der Klebe-, Dicht- und Beschichtungstechnik weit verbreitet. Dabei zeichnen sich (Meth)acrylatzusammensetzungen vor allem durch eine hohe Anfangsfestigkeit und eine allgemein rasche Aushärtung, Epoxidharze vor allem durch eine hohe Endfestigkeit aus.

Um die Vorteile beider Technologien zu nutzen, werden Hybridsysteme mit (Meth)acrylaten und Epoxiden hergestellt. Derartige Hybridsysteme sind beispielsweise beschrieben in EP 1 431 365 A1 und EP 0 160 621 A1. Der Nachteil dieser Zusammensetzungen ist, dass für die Aushärtung des Epoxidharzes eine erhöhte Temperatur im Bereich von etwa 120 bis 150 °C nötig ist und dass sie dadurch für wärmeempfindliche Substrate ungeeignet sind.

Ein weiterer Grund gegen den Einsatz von hitzehärtenden Zusammensetzungen ergibt sich beispielsweise auch in Anwendungen, in welchen die Zusammensetzung grossflächig appliziert wird und wo das mit der Zusammensetzung versehene Substrat aufgrund seiner Dimensionen nicht ohne weiteres gleichmässig und über die gesamte Fläche gleichzeitig, beispielsweise in einem Ofen, erwärmt werden kann, so dass die Zusammensetzung aushärten könnte. Beispielsweise ist das bei grossflächigen Beschichtungen, insbesondere auch bei Bodenbelägen, der Fall. Eine ungleichmässige Erwärmung und die damit verbundene ungleichmässige Aushärtung hitzehärtender Zusammensetzungen können in einem solchen Fall zu Spannungen innerhalb der ausgehärteten Zusammensetzung führen.

Ebenfalls ungeeignet sind hitzehärtende Zusammensetzungen aus dem Stand der Technik für die Verklebung von Substraten mit unterschiedlichen Wärmeausdehnungskoeffizienten, da diese beim Abkühlen nach der Aushärtung des Klebstoffs unterschiedliche Kontraktionen aufweisen, wodurch es zu ungünstigen Spannungen im Haftverbund kommen kann. Für derartige Anwendungen sind die erfindungsgemässen Zusammensetzungen besonders geeignet.

Die bis anhin bekannten Härter für Epoxidharze, insbesondere aliphatische Amine, welche eine Aushärtung des Epoxidharzes auch bei Raumtemperatur ermöglichen, eignen sich nicht für den Einsatz in einem Hybridsystem mit (Meth)acrylaten und Epoxiden, da sie die radikalische Polymerisationsreaktion der (Meth)acrylatmonomere hemmen und somit keine optimale Anfangsfestigkeit erreicht wird.

### Darstellung der Erfindung

Aufgabe der vorliegenden Erfindung ist es daher, eine Zusammensetzung zur Verfügung zu stellen, welche kurz nach ihrer Applikation eine hohe Anfangsfestigkeit aufweist und nach weiterem Aushärten bei Raumtemperatur eine hohe Endfestigkeit erlangt.

Überraschenderweise wurde nun gefunden, dass Zusammensetzungen gemäss Anspruch 1 diese Aufgabe lösen.

Durch den für den Fachmann in keiner Weise nahe liegenden Einsatz spezifischer Verbindungen als Härter für das Epoxidharz, vermag die radikalische Polymerisationsreaktion unmittelbar nach der Applikation der Zusammensetzung einzusetzen und ungehemmt abzulaufen, so dass eine hohe Anfangsfestigkeit erreicht wird. Gleichzeitig ermöglicht diese spezifische Verbindung die vollständige Aushärtung des Epoxidharzes, ohne dass dem System in irgendeiner Weise zusätzlich Energie zugeführt wird, das heisst insbesondere, dass der Zusammensetzung zur Aushärtung und/oder zur Nachhärtung keine weitere Wärme zugeführt werden muss.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt eine Zusammensetzung umfassend
a) mindestens ein radikalisch polymerisierbares Monomer **M**;
b) mindestens einen Radikalbildner;
c) mindestens ein Epoxidharz **A**, welches durchschnittlich mehr als eine Epoxidgruppe pro Molekül aufweist; sowie
d) mindestens eine Verbindung der Formel (I).

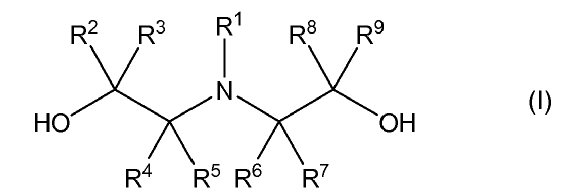

Dabei steht der Rest R¹ für einen Kohlenwasserstoffrest mit 1 bis 6 C-Atomen, insbesondere für eine Ethyl- oder für eine Methylgruppe.

Die Reste R³, R⁴, R⁵, R⁶, R⁷ und R⁸ stehen unabhängig voneinander je für ein Wasserstoffatom oder für einen Kohlenwasserstoffrest mit 1 bis 6 C-Atomen, insbesondere für eine Ethyl- oder für eine Methylgruppe. Bevorzugt stehen die Reste R³, R⁴, R⁵, R⁶, R⁷ und R⁸ für ein Wasserstoffatom.

Die Reste R² und R⁹ stehen unabhängig voneinander je für ein Wasserstoffatom oder für einen Kohlenwasserstoffrest mit 1 bis 6 C-Atomen, insbesondere für eine Ethyl- oder für eine Methylgruppe, oder für einen Rest der Formel (II), 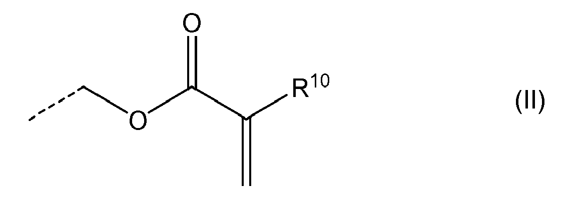 wobei der Rest R¹⁰ für ein Wasserstoffatom oder für eine Methylgruppe steht. Bevorzugt stehen die Reste R² und/oder R⁹ für einen Rest der Formel (II).

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "polymeres Polyol" umfasst im vorliegenden Dokument ein beliebiges Polymer gemäss vorhergehender Definition, welches mehr als eine Hydroxylgruppe aufweist. Dem entsprechend umfasst der Begriff "polymeres Diol" ein beliebiges Polymer, welches genau zwei Hydroxylgruppen aufweist.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Der Begriff "Epoxid-Festharz" ist dem Epoxid-Fachmann bestens bekannt und wird im Gegensatz zu "Epoxid-Flüssigharz" verwendet. Die Glasübergangstemperatur Tg der Epoxid-Festharze liegt über der Raumtemperatur von 23 °C, d.h. sie lassen sich bei Raumtemperatur zu schüttfähigen Partikeln zerkleinern.

Im vorliegenden Dokument bezieht sich der Term "bifunktionell" auf Monomere bzw. generell auf Moleküle, welche zwei verschiedene Typen von chemisch reaktiven funktionellen Gruppen aufweisen. Beispielsweise weist ein bifunktionelles Monomer sowohl eine radikalisch polymerisierbare Gruppe als auch eine mit Epoxidharzen reaktive Gruppe auf.

Demgegenüber bezieht sich der Term "difunktionell" auf Moleküle, welche zwei identische, chemisch reaktive funktionelle Gruppen bzw. zwei funktionelle Gruppen vom gleichen Typ aufweisen. Beispielsweise weist ein difunktionelles Molekül zwei Hydroxylgruppen auf.

Der Begriff "Diphenol" bezeichnet im vorliegenden Dokument einkernige, mehrkernige sowie kondensierte Aromaten und Heteroaromaten, welche zwei phenolische Hydroxylgruppen aufweisen.

Unter "Molekulargewicht" versteht man im vorliegenden Dokument stets das Zahlenmittel des Molekulargewichts Mₙ.

Als radikalisch polymerisierbare Monomere **M** eignen sich insbesondere Vinylester, (Meth)acrylester, Acrylamide oder Styrol.

Beispielsweise sind geeignete radikalisch polymerisierbare Monomere **M** ausgewählt aus der Gruppe bestehend aus Vinylacetat, Methyl(meth)acrylat, Ethyl(meth)acrylat, n- und i-Butyl(meth)acrylat, Hexyl(meth)acrylat, 2-Ethylhexyl(meth)acrylat, Isodecyl(meth)acrylat, Cyclohexyl(meth)acrylat, 3-Tetrahydrofuryl(meth)acrylat, Isobornyl(meth)acrylat, Norbornyl(meth)acrylat, Trimethylcyclohexyl(meth)acrylat, Benzyl(meth)acrylat, 2-Hydroxyethyl(meth)-acrylat, 2- und 3-Hydroxypropyl(meth)acrylat, Tetrahydrofurfuryl(meth)acrylat, 2-(2-Ethoxyethoxy)ethyl(meth)acrylat, Butyldiglykol(meth)acrylat, Isotridecyl-(meth)acrylat, Lauryl(meth)acrylat, Stearyl(meth)acrylat, Phenoxyethyl-(meth)acrylat, Dicyclopentadienyloxyethyl(meth)acrylat, Dihydrodicyclopentadienyl(meth)acrylat und ethoxyliertem Nonylphenol(meth)acrylat.

Vorzugsweise ist das radikalisch polymerisierbare Monomer **M** ein Methacrylat, insbesondere ausgewählt aus der Gruppe bestehend aus Methylmethacrylat (MMA), Tetrahydrofurfurylmethacrylat (THFMA), Cyclohexylmethacrylat (CHMA), Isobornylmethacrylat (IBMA) und Trimethylcyclohexylmethacrylat (TMCHMA).

Weiterhin eignen sich als radikalisch polymerisierbare Monomere **M** vernetzende Monomere wie beispielsweise Allyl(meth)acrylat oder vernetzende difunktionelle (Meth)acrylate wie beispielsweise oligomere oder polymere Verbindungen der Formel (III).

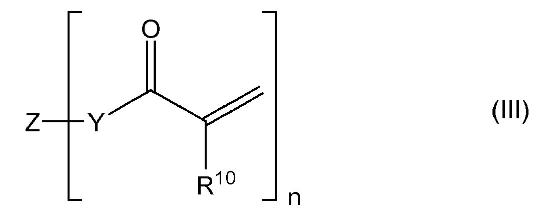

Der Rest R¹⁰ ist dabei vorhergehend bereits beschrieben worden. Der Index n steht für einen Wert von 2 bis 5. Weiterhin steht Z für ein Polyol nach Entfernung von n Hydroxylgruppen und Y steht für O oder für NR', wobei R' für einen Kohlenwasserstoffrest oder für ein Wasserstoffatom, bevorzugt für ein Wasserstoffatom, steht.

Die Verbindung der Formel (III) ist insbesondere ausgewählt aus der Gruppe bestehend aus Ethylenglykoldi(meth)acrylat, 1,3- und 1,4-Butandioldi-(meth)acrylat, 1,6-Hexandioldi(meth)acrylat, ethoxyliertem und propoxyliertem Neopentylglykoldi(meth)acrylat, propoxyliertem Glyceryltri(meth)acrylat, Trimethylolpropantri(meth)acrylat, Trimethylolpropandi(meth)acrylat, ethoxyliertem Trimethylolpropantri(meth)acrylat, modifiziertem Pentaerythritoltri(meth)acrylat, propoxyliertem ethoxyliertem Pentaerythritoltetra(meth)acrylat, Ditrimethylolpropantetra(meth)acrylat und Dipentaerythritolpenta(meth)acrylat.

Insbesondere steht n in der Verbindung der Formel (III) für einen Wert von 2 und Z steht für ein polymeres Polyol nach Entfernung von zwei OH-Gruppen. Dieses polymere Polyol ist dabei insbesondere ein Polyalkylenpolyol, ein Polyoxyalkylenpolyol oder ein Polyurethanpolyol; ein polyhydroxyfunktionelles Ethylen-Propylen-Dien-, Ethylen-Butylen-Dien- oder Ethylen-Propylen-Dien-Copolymer, ein polyhydroxyfunktionelles Copolymer aus Dienen wie 1,3-Butandien oder Diengemischen und Vinylmonomeren wie Styrol, Acrylnitril oder Isobutylen; ein polyhydroxyfunktionelles Polybutadienpolyol; ein polyhydroxyfunktionelles Acrylonitril/Butadien-Copolymer; oder ein Polysiloxanpolyol.

Beispielsweise sind derartige difunktionelle (Meth)acrylate ausgewählt aus der Gruppe bestehend aus Polyethylenglykoldi(meth)acrylat wie Diethylenglykoldi(meth)acrylat, Triethylenglykoldi(meth)acrylat, Tetraethylenglykoldi(meth)acrylat; Polypropylenglykoldi(meth)acrylat wie Dipropylenglykoldi(meth)acrylat, Tripropylenglykoldi(meth)acrylat; und Tris-(2-hydroxyethyl)-isocyanurattri(meth)acrylat.

Weiterhin geeignet ist Z ein Diphenol, insbesondere ein alkoxyliertes Diphenol, nach Entfernung von zwei OH-Gruppen, bevorzugt ethoxyliertes Bisphenol A. Beispielsweise ist ein derartiges difunktionelles (Meth)acrylat unter dem Handelsnamen Sartomer^{®} SR 348 kommerziell erhältlich von der Firma Sartomer Company, Inc., USA.

Weiterhin geeignet sind als radikalisch polymerisierbare Monomere **M** auch difunktionelle (Meth)acrylate wie Epoxy(meth)acrylate, insbesondere Epoxy(meth)acrylate, welche aus der Umsetzung von Bisphenol-A-diglycidylether mit (Meth)acrylsäure erhältlich sind. Beispielsweise ist ein derartiges difunktionelles (Meth)acrylat unter dem Handelsnamen Sartomer^{®} CN 104 kommerziell erhältlich von der Firma Sartomer Company, Inc., USA.

Geeignete polyhydroxyterminierte Acrylnitril/Butadien-Copolymere werden typischerweise aus carboxylterminierten Acrylnitril/Butadien-Copolymeren, welche beispielsweise unter dem Namen Hypro^{®} (früher Hycar^{®}) CTBN von Emerald Performance Materials, LLC, USA, kommerziell erhältlich sind, und Epoxiden oder Aminoalkoholen hergestellt.

Derartige geeignete radikalisch polymerisierbare Monomere **M** der Formel (III) sind beispielsweise kommerziell erhältlich von der Firma Kraton Polymers, USA, oder unter den Handelsnamen Hypro^{®} VTB und Hypro^{®} VTBNX von der Firma Emerald Performance Materials, LLC, USA.

Beim radikalisch polymerisierbaren Monomer **M** der Formel (III) handelt es sich insbesondere um ein Polyurethan(meth)acrylat. Derartige Verbindungen sind typischerweise, in einer dem Fachmann bekannten Art und Weise, herstellbar aus der Reaktion von mindestens einem Polyisocyanat, insbesondere ein Diisocyanat, und einer (Meth)acrylsäure, einem (Meth)acrylamid oder einem (Meth)acrylsäureester, welcher eine Hydroxylgruppe aufweist. Gegebenenfalls kann das Diisocyanat vor der Umsetzung mit (Meth)-acrylsäure, einem (Meth)acrylamid oder einem (Meth)acrylsäureester, welcher eine Hydroxylgruppe aufweist, mit mindestens einem Polyol **P**, insbesondere einem Diol, in einem dem Fachmann bekannten Verfahren zu einem Isocyanatgruppen aufweisenden Polyurethanpolymer umgesetzt werden.

Zur Umsetzung mit den Isocyanatgruppen des Polyisocyanats eignen sich insbesondere Hydroxyalkyl(meth)acrylat wie Hydroxypropylacrylat (HPA), Hydroxypropylmethacrylat (HPMA), Hydroxybutylacrylat (HBA) oder Hydroxybutylmethacrylat (HBMA), bevorzugt Hydroxyethylacrylat (HEA) oder Hydroxyethylmethacrylat (HEMA), oder ein Monohydroxypoly(meth)acrylat eines Polyols, bevorzugt von Glycerin oder Trimethylolpropan.

Polyurethan(meth)acrylate können ebenfalls hergestellt werden durch Veresterung eines Hydroxylgruppen aufweisenden Polyurethanpolymers mit (Meth)acrylsäure.

Weiterhin können Polyurethan(meth)acrylate hergestellt werden durch die Umsetzung eines (Meth)acrylsäureesters, welches mindestens eine Isocyanatgruppe aufweist, mit einem Hydroxylgruppen aufweisenden Polyurethanpolymer oder mit einem Polyol, wie sie beispielsweise im vorliegenden Dokument beschrieben sind. Als (Meth)acrylsäureester, welches mindestens eine Isocyanatgruppe aufweist, eignet sich beispielsweise 2-Isocyanatoethylmethacrylat.

Als Diisocyanate eignen sich grundsätzlich alle Diisocyanate. Beispielsweise sind erwähnt 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3-und 1,4-Bis-(isocyanatomethyl)-cyclohexan, m- und p-Xylylendiisocyanat (mund p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Bevorzugte Polyole **P** sind Polyoxyalkylenpolyole, auch "Polyetherpolyole" genannt, Polyesterpolyole, Polycarbonatpolyole und deren Mischungen. Die meist bevorzugten Polyole sind Diole, insbesondere Polyoxyethylendiole, Polyoxypropylendiole oder Polyoxybutylendiole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, sogenannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin sind dies Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol oder durch Oxidation von Polybutadien hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren (kommerziell erhältlich unter dem Namen Hypro^{®} CTBN von der Firma Emerald Performance Materials, LLC, USA) hergestellt werden können.

Diese genannten Polyole weisen bevorzugt ein mittleres Molekulargewicht von 250 bis 30'000 g/mol, insbesondere von 1 `000 bis 30'000 g/mol, und eine mittlere OH-Funktionalität im Bereich von 1.6 bis 3 auf.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Isocyanatgruppen aufweisenden Polyurethanpolymers mitverwendet werden.

Beispielsweise sind geeignete Polyole **P** in den Abschnitten [0029] bis [0039] von US 2006/0122352 A1 beschrieben, dessen gesamte Offenbarung hiermit durch Bezugnahme eingeschlossen wird.

Insbesondere ist das radikalisch polymerisierbare Monomere **M** der Formel (III) bei Raumtemperatur flüssig, was auch zähflüssige und hochviskose Elastomere einschliesst.

Selbstverständlich ist es möglich und kann sogar von Vorteil sein Mischungen der vorhergehend beschriebenen radikalisch polymerisierbaren Monomere **M** einzusetzen.

Der Anteil an radikalisch polymerisierbarem Monomer **M** beträgt vorzugsweise 10 bis 90 Gew.-%, insbesondere 25 bis 75 Gew.-%, bevorzugt 30 bis 65 Gew.-%, an der gesamten Zusammensetzung.

Weiterhin umfasst die Zusammensetzung mindestens einen Radikalbildner.

Der Radikalbildner ist insbesondere ein Peroxid, ein Hydroperoxid oder ein Perester. Meist bevorzugt ist der Radikalbildner Dibenzoylperoxid.

Typischerweise weist die Zusammensetzung weiterhin mindestens einen Katalysator für die Radikalbildung auf. Dieser Katalysator ist insbesondere ein tertiäres Amin, ein Übergangsmetallsalz oder ein Übergangsmetallkomplex. Beispielsweise sind solche geeignete tertäre Amine aromatische Amine, insbesondere ausgewählt aus der Gruppe bestehend aus N,N-Dimethylanilin, N,N-Diethylanilin, N,N-Bis(hydroxyalkyl)anilin wie N,N-Bis(2-hydroxyethyl)anilin, N,N-Alkylhydroxyalkylanilin wie N-Ethyl-N-hydroxyethylanilin, N,N-Dimethyl-*p*-toluidin, N,N-Diethyl-*p*-toluidin, N-Methyl-N-hydroxyethyl-p-toluidin, N,N-Bis(2-hydroxyethyl)-*p*-toluidin sowie alkoxylierte N,N-Bis(hydroxyethyl)-p-toluidine, N-ethoxyliertes *p*-Toluidin, N,N-Bis(2-hydroxyethyl)-xylidin, N-Alkylmorpholin und Mischungen davon. Übergangmetallsalze und Übergangsmetallkomplexe sind beispielsweise Salze und Komplexe von Cobalt, Nickel, Kupfer, Mangan oder Vanadium.

Weitere bevorzugte Katalysatoren für die Radikalbildung sind beispielsweise beschrieben in den Abschnitten [0041] - [0054] von US 2002/0007027 A1, dessen gesamte Offenbarung hiermit durch Bezugnahme eingeschlossen wird.

Der Katalysator für die Radikalbildung wird üblicherweise in einer Menge von 0.01 bis 2.5 Gew.-%, insbesondere von 0.1 bis 2 Gew.-%, bezogen auf die Zusammensetzung, eingesetzt.

Als Radikalbildner können beispielsweise auch Moleküle eingesetzt werden, welche unter Einfluss von Wärme oder von elektromagnetischer Strahlung Radikale bilden, die dann zur Polymerisation der Zusammensetzung führen. Typischerweise sind dies thermisch aktivierbare Radikalbildner und Photoinitiatoren.

Als thermisch aktivierbare Radikalbildner eignen sich solche, welche bei Raumtemperatur noch genügend stabil sind, bei leicht erhöhter Temperatur aber bereits Radikale bilden.

Als Photoinitiator werden Radikalbildner bezeichnet, welche unter dem Einfluss von elektromagnetischer Strahlung Radikale bilden. Insbesondere geeignet ist ein Photoinitiator, welcher bei einer Bestrahlung mit einer elektromagnetischen Strahlung der Wellenlänge von 230 nm bis 400 nm Radikale bildet und bei Raumtemperatur flüssig ist. Beispielsweise sind derartige Photoinitiatoren ausgewählt aus der Gruppe bestehend aus α-Hydroxyketonen, Phenylglyoxylaten, Monoacylphosphinen, Diacylphosphinen, Phosphinoxiden und Mischungen davon.

Weiterhin umfasst die Zusammensetzung mindestens ein Epoxidharz **A,** welches durchschnittlich mehr als eine Epoxidgruppe pro Molekül aufweist.

Als Epoxidharz **A** eignen sich bevorzugt Epoxidharze der Formel (IV).

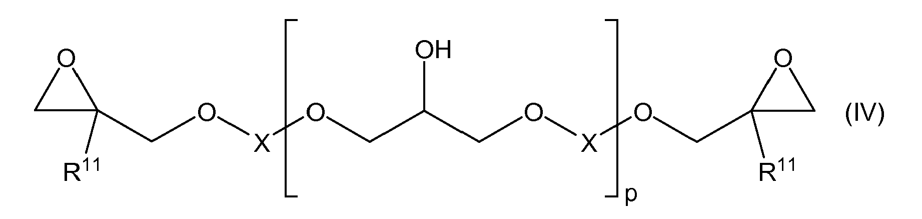

Dabei steht der Rest R¹¹ für ein Wasserstoffatom oder für eine Methylgruppe.

Der Index p steht für einen Wert von 0 bis 12, insbesondere für einen Wert von 0 bis 1, bevorzugt für einen Wert von 0 bis 0,2.

Typischweise ist das Epoxidharz **A** erhältlich aus der Umsetzung von Epichlorhydrin und/oder 2-Methylepichlorhydrin mit einem Diphenol der Formel HO-X-OH. Der Rest X steht unabhängig voneinander jeweils für einen zweiwertigen Rest eines Diphenols nach Entfernung der beiden Hydroxylgruppen. Als Diphenol eignen sich insbesondere Diphenole, welche ausgewählt sind aus der Gruppe bestehend aus 1,2-, 1,3-, und 1,4-Dihydroxybenzol, 1,3-Dihydroxytoluol, 3,5-Dihydroxybenzoate, 2,2-Bis(4-hydroxyphenyl)propan (= Bisphenol A), Bis(4-hydroxyphenyl)methan (= Bisphenol F), Bis(4-hydroxyphenyl)sulfon (= Bisphenol S), Naphtoresorcin, Dihydroxynaphthalin, Dihydroxyanthrachinon, Dihydroxy-biphenyl, 3,3-Bis(p-hydroxyphenyl)phthalide, 5,5-Bis(4-hydroxyphenyl)hexahydro-4,7-methanoindan, Phenolpthalein, Fluorescein, 4,4'-[Bis-(hydroxyphenyl)-1,3-phenylenbis-(1-Methylethyliden)] (= Bisphenol M), 4,4'-[Bis-(hydroxyphenyl)-1,4-phenylenbis-(1-Methylethyliden)] (= Bisphenol P), 2,2'-Diallyl-bisphenol-A, Diphenole und Dikresole hergestellt durch Umsetzung von Phenolen oder Kresolen mit Diisopropylidenbenzol sowie alle Isomeren der vorgenannten Verbindungen.

Weiterhin sind geeignete Epoxidharze **A** auch erhältlich aus der Umsetzung von Epichlorhydrin und/oder 2-Methylepichlorhydrin mit einem Aminophenol der Formel H₂N-X-OH oder mit einem Dianilin der Formel H₂N-X-NH₂, wobei der Rest X bereits vorhergehend beschrieben ist. Beispiele derartiger Epoxidharze sind N,N,O-Triglycidyl-p-aminophenol, N,N,O-Triglycidyl-m-aminophenol, N,N,N',N'-Tetraglycidyl-4,4'-diaminodiphenylmethan und N,N,N',N'-Tetraglycidyl-4,4'-diaminodiphenylpropan.

Weiterhin bevorzugt steht der Rest X für Bisphenol A oder für Bisphenol F nach Entfernung der beiden Hydroxylgruppen.

Bevorzugt handelt es sich beim Epoxidharz **A** um ein Epoxid-Flüssigharz. In einer weiteren Ausführungsform enthält die Zusammensetzung zusätzlich zum Epoxid-Flüssigharz auch mindestens ein Epoxid-Festharz. Im Epoxid-Festharz steht der Index p für Werte von > 1, insbesondere für Werte von ≥ 1.5.

Bevorzugte Epoxid-Flüssigharze sind beispielsweise kommerziell erhältlich unter den Handelsnamen Araldite^{®} GY 250, Araldite^{®} PY 304 oder Araldite^{®} GY 282 von der Firma Huntsman International LLC, USA, oder D.E.R.^{®} 331 oder D.E.R.^{®} 330 von der Firma The Dow Chemical Company, USA, oder unter dem Handelsnamen Epikote^{®} 828 oder Epikote^{®} 862 von der Firma Hexion Specialty Chemicals Inc, USA.

Bevorzugte Epoxid-Festharze sind beispielsweise kommerziell erhältlich unter den Handelsnamen Araldite^{®} GT 7071 oder Araldite^{®} GT 7004 von der Firma Huntsman International, LLC, USA. Weitere geeignete Epoxid-Festharze sind beispielsweise kommerziell erhältlich von The Dow Chemical Company, USA, oder von Hexion Specialty Chemicals Inc, USA.

Weiterhin eignen sich als Epoxidharze **A** beispielsweise aliphatische Polyepoxide der Formeln (V) oder (VI).

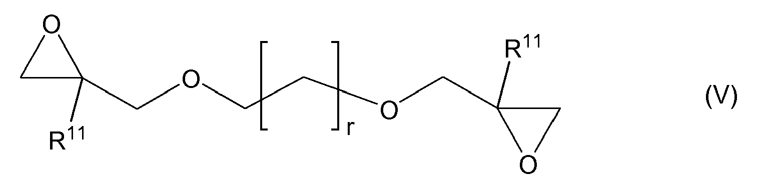

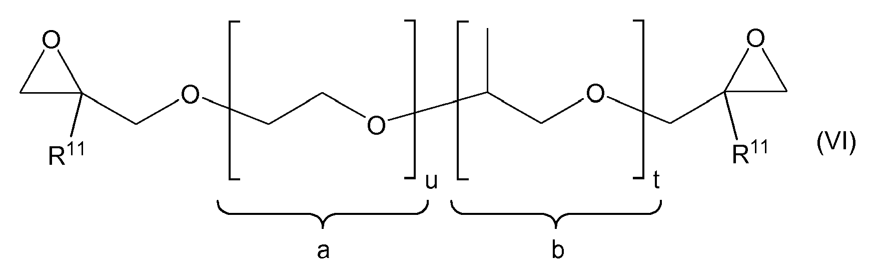

Hierbei steht r für einen Wert von 1 bis 9, insbesondere von 3 bis 5. Zudem steht u für einen Wert von 0 bis 10 und t für einen Wert von 0 bis 10, mit der Massgabe, dass die Summe von u und t ≥ 1 ist. Der Rest R¹¹ wurde bereits vorhergehend beschrieben. Schliesslich stellt a das Strukturelement dar, welches von Ethylenoxid stammt, und b stellt das Strukturelement dar, welches von Propylenoxid stammt, wobei die Bausteine a und b blockartig, abwechselnd oder zufällig angeordnet sein können. Es handelt sich somit bei Formel (VI) um (Poly)ethylenglycoldiglycidylether, (Poly)propylenglycoldiglycidylether und (Poly)ethylenglycol/propylenglycoldiglycidylether.

Besonders geeignete aliphatische oder cycloaliphatische Diglycidylether sind Ethylenglykoldiglycidylether, Butandioldiglycidylether oder Hexandioldiglycidylether.

Der Anteil an Epoxidharz **A** beträgt vorzugsweise 5 bis 40 Gew.-%, insbesondere 8 bis 30 Gew.-%, bevorzugt 15 bis 25 Gew.-%, an der gesamten Zusammensetzung.

Weiterhin umfasst die Zusammensetzung mindestens eine Verbindung der Formel (I) wie sie vorhergehend beschrieben worden ist.

Derartige Verbindungen lassen sich beispielsweise herstellen durch zweifache Alkoxylierung von Alkylaminen oder durch einfache Alkoxylierung von N-Alkylalkanolaminen. Beispielsweise ist N-Methyldiethanolamin erhältlich aus der Umsetzung von Methylamin mit Ethylenoxid.

Geeignete Verbindungen der Formel (I) sind neben N-Methyldiethanolamin beispielsweise auch N-Methyldipropanolamin, N-Methyldiisopropanolamin, N-Butyldiethanolamin und dergleichen.

Die erfindungsgemässe Zusammensetzung kann weiterhin mindestens ein bifunktionelles Monomer **L** umfassen, welches sowohl gegenüber dem radikalisch polymerisierbaren Monomer **M** als auch gegenüber dem Epoxidharz **A** reaktiv ist.

Derartige bifunktionelle Monomere **L** sind beispielsweise ausgewählt aus der Gruppe bestehend aus Glycidyl(meth)acrylat, α,β-ungesättigten Carbonsäuren wie (Meth)acrylsäure, α,β-ungesättigten Dicarbonsäuren, 2-(Meth)acrylamido-2-methylpropansulfonsäure, Maleinsäureanhydrid, teilhydriertes Phthalsäureanhydrid und (Meth)acrylate der Formel (VII).

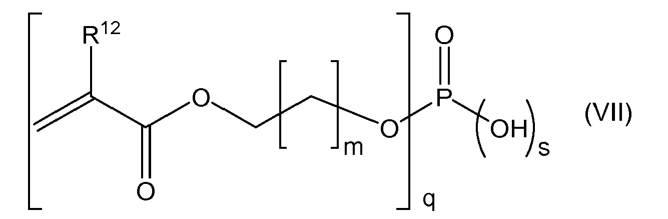

Dabei steht der Rest R¹² entweder für ein Wasserstoffatom oder für eine Methylgruppe. Der Index m steht für einen Wert von 1 bis 15, insbesondere von 1 bis 5, bevorzugt von 1 bis 3. Der Index q steht für einen Wert von 1 bis 3 steht und der Index s für einen Wert von 3 minus q. Insbesondere sind derartige (Meth)acrylate der Formel (VII) 2-Hydroxyethyl(meth)acrylat-Phosphorsäure-Partialester.

Bevorzugt sind dabei bifunktionelle Monomere, welche bei Raumtemperatur gegenüber dem Epoxidharz **A** reaktiv sind. Meist bevorzugt ist das bifunktionelle Monomer L Glycidyl(meth)acrylat.

Der Anteil an bifunktionellem Monomer **L** beträgt vorzugsweise 1 bis 30 Gew.-%, insbesondere 5 bis 20 Gew.-%, bevorzugt 7 bis 15 Gew.-%, an der gesamten Zusammensetzung.

Die Zusammensetzung kann weiterhin zusätzlich mindestens einen Haftverbesserer, insbesondere eine (Meth)acrylsäure, ein Metall(meth)acrylat oder ein (Meth)acrylat der Formel (VII), wie es vorhergehend beschrieben worden ist, enthalten.

Bevorzugte Metall(meth)acrylate sind Metall(meth)acrylate von Calcium, Magnesium oder Zink, welche eine Hydroxylgruppe und/oder (Meth)-acrylsäure oder (Meth)acrylat als Ligand oder Anion aufweisen. Besonders bevorzugte Metall(meth)acrylate sind Zinkdi(meth)acrylat, Calciumdi(meth)-acrylat, Zn(OH)(meth)acrylat und Magnesiumdi(meth)acrylat.

Bevorzugte (Meth)acrylate der Formel (VII) sind 2-Methacryloyloxyethylphosphat, Bis(2-Methacryloyloxyethyl)phosphat sowie Tris(2-Methacryloyloxyethyl)phosphat und Mischungen davon.

Weitere geeignete Haftverbesserer sind Silane, insbesondere organofunktionelle Silane. Besonders geeignet sind dabei (Meth)acryloxyalkyltrialkoxysilane wie 3-Methacryloxypropyltrimethoxysilan, Glycidyloxyalkyltrialkoxysilane wie 3-Glycidoxypropyltrimethoxysilan, und dergleichen. Beispielsweise sind derartige geeignete Silane unter dem Handelsnamen Dynasylan^{®} MEMO von der Firma Evonik Degussa GmbH, Deutschland, oder unter dem Handelsnahmen Silquest^{®} A-187, Momentive Performance Materials Inc., USA, kommerziell erhältlich.

Der Anteil des gegebenenfalls vorhandenen Haftverbesserers an der gesamten Zusammensetzung beträgt vorzugsweise 0.01 bis 12 Gew.-%, insbesondere 0.5 bis 8 Gew.-%.

Weiterhin kann die Zusammensetzung zusätzlich mindestens ein Core-Shell Polymer enthalten. Core-Shell Polymere bestehen aus einem elastischen Kernpolymer (Core) und einem starren Schalen-Polymer (Shell). Besonders geeignete Core-Shell Polymere bestehen aus einer starren Schale eines starren thermoplastischen Polymers, welcher auf einem Kern aus vernetztem elastischem Acrylat- oder Butadien-Polymer aufgepfropft ist.

Besonders geeignete Core-Shell-Polymere sind diejenigen, welche im radikalisch polymerisierbaren Monomer **M** aufquellen, sich aber darin nicht lösen.

Bevorzugte Core-Shell-Polymere sind so genannte MBS Polymere, welche beispielsweise kommerziell unter dem Handelsnamen Clearstrength^{®} von Arkema Inc., USA, oder Paraloid^{®} von Rohm and Haas, USA, erhältlich sind. Die Core-Shell Polymere werden bevorzugt in einer Menge von 0.01 bis 30 Gew.-%, insbesondere von 10 bis 20 Gew.-%, bezogen auf die gesamte Zusammensetzung, eingesetzt.

Die Zusammensetzung kann weiterhin zusätzliche feste oder flüssige Zähigkeitsverbesserer enthalten. Unter einem "Zähigkeitsverbesserer" wird hierbei und im Folgenden ein Zusatz zu einer Polymermatrix verstanden, der bereits bei geringen Zuschlägen von 0.1 bis 15 Gew.-%, insbesondere von 0.5 bis 8 Gew.-%, bezogen auf das Gesamtgewicht der Zusammensetzung, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Neben den vorhergehend beschriebenen Core-Shell-Polymeren eignen sich als feste Zähigkeitsverbesserer beispielsweise organische ionengetauschte Schichtminerale, wie sie dem Fachmann unter den Begriffen Organoclay oder Nanoclay bekannt sind; Polymere oder Blockcopolymere, insbesondere der Monomere Styrol, Butadien, Isopren, Chloropren, Acrylnitril und Methylmethacrylat, sowie chlorsulfoniertes Polyethylen; und amorphes Siliciumdioxid.

Als flüssige Zähigkeitsverbesserer eignen sich insbesondere Flüssigkautschuke, wie sie unter den Handelsnahmen Hypro^{®} CTBN, ETBN oder VTBN kommerziell erhältlich sind von der Firma Emerald Performance Materials, LLC, USA, sowie epoxidharzmodifizierte Flüssigkautschuke des Typs Hypro^{®} CTBN.

Weiterhin kann die Zusammensetzung zusätzlich mindestens einen Füllstoff enthalten. Insbesondere geeignet sind dabei natürliche, gemahlene oder gefällte Calciumcarbonate (Kreiden), welche gegebenenfalls mit Fettsäuren, insbesondere Stearaten, beschichtet sind, Montmorillonite, Bentonite, Bariumsulfat (BaSO₄, auch Baryt oder Schwerspat genannt), calcinierte Kaoline, Quarzmehl, Aluminiumoxide, Aluminiumhydroxide, Kieselsäuren, insbesondere pyrogene Kieselsäuren, modifizierte Rizinusölderivate und Polymerpulver oder Polymerfasern. Bevorzugt sind Calciumcarbonate, meist bevorzugt sind beschichtete Calciumcarbonate.

Der Füllstoff wird üblicherweise in einer Menge von 0.01 bis 30 Gew.-%, insbesondere von 10 bis 30 Gew.-%, bevorzugt 15 bis 20 Gew.-%, bezogen auf die gesamte Zusammensetzung, eingesetzt.

Weiterhin kann die Zusammensetzung zusätzlich mindestens einen Epoxidgruppen aufweisenden Reaktivverdünner **G** aufweisen. Bei diesen Reaktivverdünnern G handelt es sich insbesondere um Glycidylether von monofunktionellen gesättigten oder ungesättigten, verzweigten oder unverzweigten, zyklischen oder offenkettigen Alkoholen mit 4 bis 30 C-Atomen, beispielsweise Butanolglycidylether, Hexanolglycidylether, 2-Ethylhexanolglycidylether, Allylglycidylether, Tetrahydrofurfuryl- und Furfurylglycidylether, Trimethoxysilylglycidylether und dergleichen. Weiterhin eignen sich Glycidylether von difunktionellen gesättigten oder ungesättigten, verzweigten oder unverzweigten, zyklischen oder offenkettigen Alkoholen mit 2 bis 30 C-Atomen, beispielsweise Ethylenglykol-, Butandiol-, Hexandiol-, Oktandiolgylcidylether, Cyclohexandimethanoldigylcidylether, Neopentylglycoldiglycidylether und dergleichen. Ebenfalls geeignet sind Glycidylether von tri- oder polyfunktionellen, gesättigten oder ungesättigten, verzweigten oder unverzweigten, zyklischen oder offenkettigen Alkoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan und dergleichen. Weiterhin eignen sich Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnussschalenöl), N,N-Diglycidylanilin und dergleichen.

Als Reaktivverdünnern G eignen sich witerhin Epoxidierte Amine wie N,N-Diglycidylcyclohexylamin und dergleichen; Epoxidierte Mono- oder Dicarbonsäuren wie Neodecansäureglycidylester, Methacrylsäureglycidylester, Benzoesäureglycidylester, Phthalsäure-, Tetra- und Hexahydrophthalsäurediglycidylester, Diglycidylester von dimeren Fettsäuren und dergleichen; sowie Epoxidierte di- oder trifunktionelle, nieder- bis hochmolekulare Polyetherpolyole wie Polyethylenglycoldiglycidylether, Polypropyleneglycoldiglycidylether und dergleichen.

Besonders bevorzugt sind Hexandioldiglycidylether, Kresylglycidylether, p-tert.-Butylphenylglycidylether, Polypropylenglycoldiglycidylether und Polyethylenglycoldiglycidylether.

Vorteilhaft beträgt der Anteil des Epoxidgruppen aufweisenden Reaktivverdünners G 0.5 bis 20 Gew.-%, vorzugsweise 1 bis 8 Gew.-%, bezogen auf das Gesamtgewicht der Zusammensetzung.

Die Zusammensetzung kann gegebenenfalls zusätzlich noch weitere Bestandteile enthalten. Derartige zusätzliche Bestandteile sind insbesondere Zähigkeitsmodifikatoren, Farbstoffe, Pigmente, Inhibitoren, UV- und Hitzestabilisatoren, Metalloxide, Antistatika, Flammschutzmittel, Biozide, Weichmacher, Wachse, Verlaufsmittel, Haftvermittler, Thixotropierungsmittel, Abstandhalter und weitere dem Fachmann bekannte gängige Rohstoffe und Additive.

Vorzugsweise handelt es sich bei der Zusammensetzung um eine zweikomponentige Zusammensetzung, wobei zwei Komponenten **K1** und **K2,** bis zur Applikation getrennt voneinander aufbewahrt werden. Typischerweise beinhaltet die erste Komponente **K1** das radikalisch polymerisierbare Monomer **M,** die Verbindung der Formel (I) sowie das gegebenenfalls vorhandene bifunktionelle Monomer L. Die zweite Komponente **K2** beinhaltet insbesondere den Radikalbildner sowie das Epoxidharz **A.**

Weiterhin können in einer zweikomponentigen Zusammensetzung auch andere Bestandteile, insbesondere solche, welche durch Reaktion untereinander die Lagerstabilität der Zusammensetzung beeinträchtigen würden, getrennt aufbewahrt werden.

Bevorzugt weisen in beschriebenen zweikomponentigen Zusammensetzungen die Komponente **K1** die Bestandteile radikalisch polymerisierbare Monomere **M,** Verbindungen der Formel (I), Katalysatoren für die Radikalbildung, bifunktionelle Monomere L, Haftverbesserer und Füllstoffe und die Komponente **K2** die Bestandteile Epoxydharz **A,** Radikalbildner und Füllstoffe auf. Das Volumenverhältnis beim Mischen von **K1** zu **K2** liegt insbesondere im Bereich von 1:1 bis 10:1.

In gewissen Fällen kann es vorteilhaft sein, die beiden Komponenten **K1** und **K2** unterschiedlich einzufärben. Dadurch lässt sich bei der Mischung der Komponenten die Mischgüte überprüfen und Mischfehler lassen sich frühzeitig erkennen. Ebenfalls lässt sich durch diese Massnahme qualitativ überprüfen, ob das vorgesehene Mischverhältnis eingehalten wurde.

Eine derartige zweikomponentige Zusammensetzung wird typischerweise in einer Verpackung aufbewahrt, welche zwei von einander getrennte Kammern aufweist. Die Komponente **K1** ist hierbei in der einen Kammer und die Komponente **K2** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **K1** und **K2** mit Hilfe eines Statikmischers, welcher auf die Verpackung mit zwei Kammern aufgesetzt werden kann.

Solche geeigneten Verpackungen sind beispielsweise beschrieben in US 2006/0155045 A1, WO 2007/096355 A1 und in US 2003/0051610 A1, deren gesamte Offenbarung hiermit durch Bezugnahme eingeschlossen wird.

In einer grosstechnischen Anlage werden die beiden Komponenten **K1** und **K2** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

Die Aushärtung der erfindungsgemässen Zusammensetzung erfolgt einerseits durch eine radikalische Polymerisationsreaktion der radikalisch polymerisierbaren Monomere **M** und gegebenenfalls weiterer radikalisch polymerisierbarer Bestandteile in der Zusammensetzung, andererseits durch eine Homopolymerisationsreaktion des Epoxidharzes **A** unter dem Einfluss der Verbindung der Formel (I).

Der Ablauf, insbesondere die Geschwindigkeit, der beiden zur Aushärtung der Zusammensetzung führenden Reaktionen kann durch die Wahl der eingesetzten Bestandteile eingestellt werden. Typischerweise verläuft die Aushärtung der Zusammensetzung zweistufig. In einem ersten Schritt läuft die radikalische Polymerisationsreaktion ab, wodurch die Zusammensetzung bereits in einem frühen Stadium eine hohe Anfangsfestigkeit erhält. In einem zweiten Schritt läuft die langsamere Homopolymerisation des Epoxidharzes ab. Dadurch härtet die Zusammensetzung weiter aus und erhält ihre hohe Endfestigkeit.

Meist bevorzugt handelt es sich bei der in der Zusammensetzung vorhandenen Verbindung der Formel (I) um ein bifunktionelles Monomer, das heisst, dass R² und/oder R⁹ für einen Rest der Formel (II) stehen, womit es sowohl gegenüber dem radikalisch polymerisierbaren Monomer **M** als auch gegenüber dem Epoxidharz **A** reaktiv ist.

Die Zusammensetzung ist insbesondere bei Raumtemperatur aushärtbar, das heisst bei einer Temperatur im Bereich von 23°C. Selbstverständlich ist dem Fachmann klar, dass die Zusammensetzung auch bei erhöhten Temperaturen ausgehärtet werden kann, jedoch ist die Aushärtung bei Raumtemperatur bevorzugt.

Weiterhin betrifft die Erfindung die Verwendung einer Zusammensetzung, wie sie vorhergehend beschrieben ist, als Klebstoff, Dichtstoff oder als Beschichtung. Insbesondere eignet sich die erfindungsgemässe Zusammensetzung zum Verkleben, Abdichten oder Beschichten von Substraten, bei denen materialbedingt und/oder prozessbedingt keine hitzehärtenden Klebstoffe, Dichtstoffe und Beschichtungen eingesetzt werden können. Dies kann beispielsweise darin begründet liegen, dass zu verklebende, abzudichtende oder zu beschichtende Substrate beeinträchtigt werden könnten, wenn sie erhöhten Temperaturen, welche oftmals zur Aushärtung von Epoxidharz enthaltenden Zusammensetzungen, wie sie im Stand der Technik beschrieben sind, nötig sind, ausgesetzt werden. Derartige Substrate sind beispielsweise Kunststoffe wie Polyethylen, Polypropylen, Polyvinylchlorid und Polymethyl(meth)acrylat sowie lackierte Substrate.

Das Substrat, auf dessen Oberfläche die Zusammensetzung appliziert wird, kann im Vorfeld mit geeigneten Vorbehandlungsmitteln oder Reinigern behandelt worden sein. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösungsmitteln oder eine Beflammung oder eine Plasmabehandlung, insbesondere eine Luftplasmabehandlung bei Atmosphärendruck.

Besonders geeignet ist die Vorbehandlung bzw. die Reinigung der Substrate mit Sika^{®} Cleaner P oder Sika^{®} ADPrep, welche kommerziell erhältlich sind bei der Sika Schweiz AG.

Die erfindungsgemässe Zusammensetzung wird insbesondere verwendet in einem Verfahren des Verklebens zweier Substrate S1 und S2 umfassend die Schritte
i) Applizieren einer Zusammensetzung gemäss vorhergehender Beschreibung auf ein Substrat **S1**;
ii) Kontaktieren der applizierten Zusammensetzung mit einem zweiten Substrat **S2** innerhalb der Offenzeit;
oder
i') Applizieren einer Zusammensetzung gemäss vorhergehender Beschreibung auf ein Substrat **S1**;
ii') Applizieren einer Zusammensetzung gemäss vorhergehender Beschreibung auf ein Substrat **S2**;
iii') Fügen der beiden mit Zusammensetzung applizierten Substrate **S1** und **S2** innerhalb der Offenzeit.

Dabei besteht das zweite Substrat **S2** aus dem gleichen oder einem unterschiedlichen Material wie das Substrat **S1**. Im Fall einer zweikomponentigen Zusammensetzung erfolgt vor dem Schritt i), bzw. i') und ii'), das zumindest partielle Mischen der zwei Komponenten.

Ebenfalls möglich ist ein Verfahren der Verklebung zweier Substrate **S1** und **S2** umfassend die Schritte
i") Applizieren einer Komponente **K1** gemäss vorhergehender Beschreibung auf ein Substrat **S1**;
ii") Applizieren einer Komponente **K2** gemäss vorhergehender Beschreibung auf ein Substrat **S2**;
iii") Fügen der beiden mit je einer Komponente **K1** oder **K2** beschichteten Substrate **S1** und **S2.**

Bei einem derartigen Verfahren mischen sich die beiden Komponenten **K1** und **K2** beim Fügen der Substrate. Dieses Verfahren eignet sich insbesondere bei Verklebungen über sehr dünne Klebstoffschichten.

Insbesondere wird die erfindungsgemässe Zusammensetzung auch verwendet in einem Verfahren des Abdichtens oder des Beschichtens eines Substrates **S1** umfassend die Schritte
i"') Applizieren einer Zusammensetzung gemäss vorhergehender Beschreibung auf ein Substrat **S1**;
ii"') Aushärtung der Zusammensetzung.

Im Fall einer zweikomponentigen Zusammensetzung erfolgt vor dem Schritt i"'), das zumindest partielle Mischen der zwei Komponenten.

Weiterhin umfasst die vorliegende Erfindung eine ausgehärtete Zusammensetzung, welche aus einer vorhergehend beschriebenen Zusammensetzung durch einen Härtungsprozess erhältlich ist. Insbesondere handelt es sich bei der Zusammensetzung um eine zweikomponentige Zusammensetzung, so dass die ausgehärtete Zusammensetzung durch ein zumindest partielles Mischen der beiden Komponenten **K1** und **K2** erhältlich ist. Meist bevorzugt verläuft der Härtungsprozess bei Raumtemperatur.

Ebenfalls umfasst die Erfindung Artikel, welche nach einem vorhergehend beschriebenen Verfahren verklebt, abgedichtet oder beschichtet wurden. Bei diesen Artikeln handelt es sich vorzugsweise um ein Bauwerk, insbesondere ein Bauwerk des Hoch- oder Tiefbaus, oder ein industrielles Gut oder ein Konsumgut, insbesondere ein Fenster, eine Haushaltmaschine, ein Werkzeug oder ein Transportmittel, insbesondere ein Fahrzeug zu Wasser oder zu Land, bevorzugt ein Automobil, ein Bus, ein Lastkraftwagen, ein Zug oder ein Schiff. Bevorzugt sind solche Artikel auch Anbauteile von industriellen Gütern oder Transportmittel, insbesondere auch Modulteile, welche an der Fertigungslinie als Module verwendet werden und insbesondere an- oder eingeklebt werden. Insbesondere werden diese vorgefertigten Anbauteile im Transportmittelbau eingesetzt. Beispielsweise sind derartige Anbauteile Führerkabinen von Lastkraftwagen oder von Lokomotiven oder Schiebedächer von Automobilen. Bevorzugt handelt es sich bei diesen Artikeln um Fenster und Türen, wie sie in Bauwerken eingesetzt werden.

Weiterhin umfasst die Erfindung die Verwendung einer Verbindung der Formel (I), wie sie vorhergehend beschrieben ist, als Härtungsmittel für Zusammensetzungen, welche sowohl mindestens ein Epoxidharz als auch mindestens ein radikalisch polymerisierbares Monomer umfassen. Meist bevorzugt stehen dabei die Reste R² und/oder R⁹ in der Verbindung der Formel (1) für Reste der Formel (II). Damit handelt es sich bei der Verbindung der Formel (I) um eine bifunktionelle Verbindung bzw. ein bifunktionelles Monomer, welches als Härtungsmittel für das Epoxidharz dient und als radikalisch polymerisierbares Monomer in die Polymermatrix eingebaut werden kann und insbesondere auch eingebaut wird. Besonders bevorzugt ist die Verbindung der Formel (I) hierfür, weil sie die Homopolymerisation des Epoxidharzes initiiert bzw. begünstigt, die radikalische Polymerisationsreaktion jedoch nicht beeinträchtigt.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung von 2-Hydroxy-3-((2-hydroxyethyl)(methyl)amino)propyl-methacrylat "M1"

In einen 250 ml Dreihalskolben mit Magnetrührstab, Thermometer und Rückflusskühler wurden 10.0 g (133.1 mmol) 2-(Methlyamino)ethanol und 85 g Tetrahydrofurfurylmethacrylat eingewogen. Bei Raumtemperatur wurden unter stetigem Rühren langsam 19.5 g (137.1 mmol) Glycidylmethacrylat zugetropft. Dabei wurde eine leichte Exothermie beobachtet, die Temperatur überschritt jedoch nie 70 °C. Nach 6 Stunden Rühren bei 70 °C konnten mittels Gas-Chromatograph nur noch geringe Spuren 2-(Methylamino)ethanol nachgewiesen werden. Diese ca. 25%-ige Produkt-Lösung in Tetrahydrofurfurylmethacrylat wurde in eine Glasflasche abgefüllt und ohne weitere Aufarbeitung in den Modellformulierungen eingesetzt.

### Herstellung der Zusammensetzungen

Es wurden die folgenden Zusammensetzungen hergestellt:
Als Komponente **K1** wurden die in den Tabellen 1 aufgeführten Bestandteile in den angegebenen Gewichtsanteilen in einem Dissolver bei einer Temperatur von maximal 80 °C miteinander vermischt und eingerührt, bis eine makroskopisch homogene Paste erhalten wurde.
Als Komponente **K2** wurden die in den Tabellen 1 aufgeführten Bestandteile in den angegebenen Gewichtsanteilen in einem Dissolver miteinander vermischt.

Die hergestellten Komponenten **K1** und **K2** wurden in die getrennten Kammern von Koaxialkartuschen eingefüllt und bei der Applikation mittels Statikmischer vermischt.

### Beschreibung der Prüfmethoden

Die **Zugfestigkeit,** die **Bruchdehnung** und der **Elastizitätsmodul** wurden bestimmt nach DIN EN 53504 (Zuggeschwindigkeit: 200 mm/min) an Filmen mit einer Schichtdicke von 2 mm, welche im Normklima (23±1 °C, 50±5% relative Luftfeuchtigkeit) aushärteten. Die Proben wurden direkt und kontinuierlich nach deren Herstellung geprüft.

Der **Elastizitätsmodul** ist im Bereich von 0.5 bis 1 % Dehnung angegeben.

**Tabelle 1 Zusammensetzungen 1 bis 3 und die Referenzbeispiele Ref1 bis Ref3 in Gewichtsanteilen sowie die Resultate;**

| | | | ***1*** | ***2*** | ***3*** | ***Ref1*** | ***Ref2*** | ***Ref3*** |
|---|---|---|---|---|---|---|---|---|
| **K1** | Tetrahydrofurfurylmethacrylat | | 58.3 | 34.3 | 36.3 | 59 | 41.5 | 36.3 |
| | Diethylenglykoldimethacrylat | | | 2 | 2 | | 2 | 2 |
| | Glycidylmethacrylat | | | 10.7 | | | | |
| | N-Methyldiethanolamin | | 0.7 | 2 | | | | |
| | ***M1*** | | | | 10.7 | | | |
| | Diethylaminoethylmethacrylat | | | | | | 5 | 10.7 |
| | Hypro^{®} VTBNX 1300x33 | | 13 | 15 | 12 | 13 | 12 | 12 |
| | Core-Shell Polymer | | 16 | 12 | 15 | 16 | 15 | 15 |
| | Katalysator^{a} | | 1.5 | 1.5 | 1.5 | 1.5 | 1.5 | 1.5 |
| | | | | | | | | |
| **K2** | Araldite^{Ⓡ} GY 250 | | 8 | 20 | 20 | 8 | 20 | 20 |
| | Dibenzoylperoxid^{b} | | 2.5 | 2.5 | 2.5 | 2.5 | 3 | 2.5 |
| | | | | | | | | |
| Zugfestigkeit [MPa] | | 1h | 9.08^{c} | 4.26 | 4.51 | 8.27 | 3.3 | k.A. |
| | | 7d | 8.90 | 7.41 | 14.3 | 8.78 | 5.97 | k.A. |
| | | 14d | 9.35 | 9.89 | 25.5 | 8.24 | k.A. | k.A. |
| | | 28d | 10.01 | 14.66 | 26.3 | 8.59 | 12.58 | k.A. |
| Elastizitäsmodul [MPa] | | 1h | 57^{c} | 11 | 14 | 65 | 4 | k.A. |
| | | 7d | 64 | 90 | 470 | 55 | 21 | k.A. |
| | | 14d | 89 | 234 | 932 | 39 | k.A. | k.A. |
| | | 28d | 119 | 470 | 912 | 43 | 396 | k.A. |
| Bruchdehnung in % | | 1h | 238^{c} | 166 | 99 | 247 | 157 | k.A. |
| | | 7d | 225 | 151 | 35 | 245 | 170 | k.A. |
| | | 14d | 222 | 117 | 6 | 233 | k.A. | k.A. |
| | | 28d | 221 | 69 | 7 | 238 | 79 | k.A. |

| | | | | | | | | |
|---|---|---|---|---|---|---|---|---|
| ^{a} Katalysator für Radikalbildung (tertiäres Amin auf Toluidinbasis); ^{b} 40 Gew.-% in Weichmacher; ^{c} Die Messungen wurden nach 3h durchgeführt; k.A.: keine Angabe; Beim Beispiel ***Ref3*** trat keine Härtung auf. | | | | | | | | |

## Patentansprüche

1. Zusammensetzung umfassend
a) mindestens ein radikalisch polymerisierbares Monomer **M**;
b) mindestens einen Radikalbildner;
c) mindestens ein Epoxidharz **A**, welches durchschnittlich mehr als eine Epoxidgruppe pro Molekül aufweist; sowie
d) mindestens eine Verbindung der Formel (I), 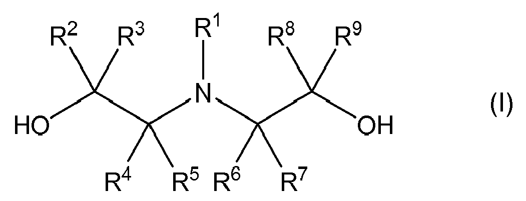 wobei der Rest R¹ für einen Kohlenwasserstoffrest mit 1 bis 6 C-Atomen, insbesondere für eine Ethyl- oder für eine Methylgruppe, steht;
die Reste R³, R⁴, R⁵, R⁶, R⁷ und R⁸ unabhängig voneinander je für ein Wasserstoffatom oder für einen Kohlenwasserstoffrest mit 1 bis 6 C-Atomen, insbesondere für eine Ethyl- oder für eine Methylgruppe, bevorzugt für ein Wasserstoffatom, stehen;
die Reste R² und R⁹ unabhängig voneinander je für ein Wasserstoffatom oder für einen Kohlenwasserstoffrest mit 1 bis 6 C-Atomen, insbesondere für eine Ethyl- oder für eine Methylgruppe, oder für einen Rest der Formel (II) stehen, 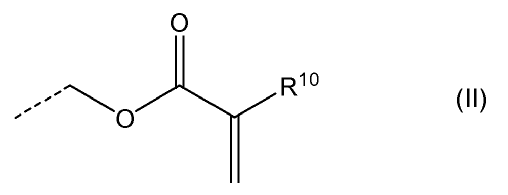 wobei der Rest R¹⁰ für ein Wasserstoffatom oder für eine Methylgruppe steht.

2. Zusammensetzung gemäss Anspruch 1, **dadurch gekennzeichnet, dass** die Reste R² und/oder R⁹ für einen Rest der Formel (II) stehen.

3. Zusammensetzung gemäss einem der vorhergehenden Ansprüche, **dadurch gekennzeichnet, dass** das radikalisch polymerisierbare Monomer **M** ein Methacrylat ist, insbesondere ausgewählt aus der Gruppe bestehend aus Methylmethacrylat (MMA), Tetrahydrofurfurylmethacrylat (THFMA), Cyclohexylmethacrylat (CHMA), Isobornylmethacrylat (IBMA) und Trimethylcyclohexylmethacrylat (TMCHMA).

4. Zusammensetzung gemäss einem der vorhergehenden Ansprüche, **dadurch gekennzeichnet, dass** der Anteil des radikalisch polymerisierbaren Monomers **M** 10 bis 90 Gew.-%, insbesondere 25 bis 75 Gew.-%, bevorzugt 30 bis 65 Gew.-%, an der gesamten Zusammensetzung beträgt.

5. Zusammensetzung gemäss einem der vorhergehenden Ansprüche, **dadurch gekennzeichnet, dass** der Radikalbildner ein Peroxid, ein Hydroperoxid oder ein Perester, meist bevorzugt Dibenzoylperoxid, ist.

6. Zusammensetzung gemäss einem der vorhergehenden Ansprüche, **dadurch gekennzeichnet, dass** die Zusammensetzung zusätzlich mindestens ein tertiäres Amin oder ein Übergangsmetallsalz oder ein Übergangsmetallkomplex als Katalysator für die Radikalbildung enthält.

7. Zusammensetzung gemäss einem der vorhergehenden Ansprüche, **dadurch gekennzeichnet, dass** das Epoxidharz **A** erhältlich ist aus der Umsetzung von Epichlorhydrin und/oder 2-Methylepichlorhydrin mit einem Diphenol, welches insbesondere ausgewählt ist aus der Gruppe bestehend aus 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (= Bisphenol A), Bis(4-hydroxyphenyl)methan (= Bisphenol F), Bis(4-hydroxyphenyl)sulfon (= Bisphenol S), Naphtoresorcin, Dihydroxynaphthalin, Dihydroxyanthrachinon, Dihydroxy-biphenyl, 3,3-Bis(p-hydroxyphenyl)phthalide, 5,5-Bis(4-hydroxyphenyl)-hexahydro-4,7-methanoindan, Phenolpthalein, Fluorescein, 4,4'-[Bis-(hydroxyphenyl)-1,3-phenylenbis-(1-Methylethyliden)] (= Bisphenol M), 4,4'-[Bis-(hydroxyphenyl)-1,4-phenylenbis-(1-Methylethyliden)] (= Bisphenol P), 2,2'-Diallyl-bisphenol-A, Diphenole und Dikresole hergestellt durch Umsetzung von Phenolen oder Kresolen mit Diisopropylidenbenzol sowie alle Isomeren der vorgenannten Verbindungen.

8. Zusammensetzung gemäss einem der vorhergehenden Ansprüche, **dadurch gekennzeichnet, dass** der Anteil des Epoxidharzes **A** 5 bis 40 Gew.-%, insbesondere 8 bis 30 Gew.-%, bevorzugt 15 bis 25 Gew.-%, an der gesamten Zusammensetzung beträgt.

9. Zusammensetzung gemäss einem der vorhergehenden Ansprüche, **dadurch gekennzeichnet, dass** die Zusammensetzung weiterhin mindestens ein bifunktionelles Monomer L umfasst, welches sowohl gegenüber dem radikalisch polymerisierbaren Monomer **M** als auch gegenüber dem Epoxidharz **A** reaktiv ist.

10. Zusammensetzung gemäss Anspruch 9, **dadurch gekennzeichnet, dass** das bifunktionelle Monomer L Glycidyl(meth)acrylat ist.

11. Zusammensetzung gemäss einem der vorhergehenden Ansprüche, **dadurch gekennzeichnet, dass** die Zusammensetzung zweikomponentig ist, wobei
die erste Komponente **K1** das radikalisch polymerisierbare Monomer **M,** die Verbindung der Formel (I) sowie das gegebenenfalls vorhandene bifunktionelle Monomer **L** umfasst; und
die zweite Komponente **K2** den Radikalbildner sowie das Epoxidharz **A** umfasst.

12. Zusammensetzung gemäss einem der vorhergehenden Ansprüche, **dadurch gekennzeichnet, dass** die Zusammensetzung bei Raumtemperatur aushärtbar ist.

13. Verwendung einer Zusammensetzung gemäss einem der Ansprüche 1 bis 12 als Klebstoff oder Dichtstoff oder als Beschichtung, insbesondere zum Verkleben oder Abdichten oder Beschichten von Substraten, bei denen materialbedingt und/oder prozessbedingt keine hitzehärtenden Klebstoffe, Dichtstoffe und Beschichtungen eingesetzt werden können.

14. Verwendung einer Verbindung der Formel (I) wie sie in einer Zusammensetzung gemäss einem der Ansprüche 1 bis 12 beschrieben ist, als Härtungsmittel für Zusammensetzungen, welche sowohl mindestens ein Epoxidharz als auch mindestens ein radikalisch polymerisierbares Monomer umfassen.

15. Verwendung gemäss Anspruch 14, **dadurch gekennzeichnet, dass** die Verbindung der Formel (I), wobei R² und/oder R⁹ einem Rest der Formel (II) entsprechen, als radikalisch polymerisierbares Monomer in die Polymermatrix eingebaut wird.
